# EUROPÄISCHE PATENTANMELDUNG

(11) **EP 4 458 739 A1**
(43) Veröffentlichungstag der Anmeldung: **06.11.2024**
(21) Anmeldenummer: 24172407.9
(22) Anmeldetag: 25.04.2024
(51) Int. Cl.: B65G 47/19, B65G 47/44

(54) **ZUFÜHRVORRICHTUNG FÜR EINE RÖNTGENINSPEKTIONSEINRICHTUNG**

(30) Priorität: 04.05.2023 DE 102023111658
(71) Anmelder: WIPOTEC GmbH, 67657 Kaiserslautern (DE)
(72) Erfinder: Morsch, Sebastian, 66540 Wiebelskirchen (DE); Kuckelberg, Christian, 66440 Blieskastel (DE); Siegrist, Michael, 67659 Kaiserslautern (DE); Zinke, Bernd, 66399 Mandelbachtal (DE); Baule, Michael, 31180 Giesen (DE)
(74) Vertreter: Eder Schieschke & Partner mbB

(57) **Zusammenfassung**

Die Erfindung betrifft eine Hygienegerechte modulare Zuführvorrichtung (1) für eine Inspektionseinrichtung, insbesondere Röntgeninspektionsvorrichtung, um Produkte eines aus Schüttgut (39) bestehenden Produktstroms, der aus einer im Wesentlichen senkrechten z-Richtung zugeführt wird, in eine im Wesentlichen horizontale Förderrichtung x und damit auf eine zur z-Richtung senkrechten in x-y-Richtung befindliche Förderebene zu überführen, wobei die Zuführvorrichtung (1) eine in z-Richtung gesehene obere, im Wesentlichen in z-Richtung gerichtete, Eingangsöffnung (3) und eine in z-Richtung gesehene untere, im Wesentlichen in x-Richtung gerichtete, Ausgangsöffnung (5) aufweist, beide Öffnungen (3, 5) mit einem Zwischenbereich (7) verbunden sind, wobei der Zwischenbereich (7) eine wenigstens in Förderrichtung x gesehene rückseitige, gekrümmte Wandung (13) aufweist, um einen schonenden Richtungswechsel der Produkte aus der z-Richtung in die x-Richtung zu bewirken, so dass der durch die Fallbewegung der Produkte entstehende Druck zumindest anteilig von der Wandung (13) aufgenommen und dadurch der Druck des Produktstroms auf ein unterhalb der Ausgangsöffnung (5) angeordnetes Fördersystem, insbesondere Förderband (9), reduziert wird. Weiterhin betrifft die Erfindung ein Verfahren zur Optimierung des Inspektionsergebnisses mit einer derartigen Inspektionseinrichtung.

## Beschreibung

Die Erfindung betrifft eine Zuführvorrichtung für eine Inspektionseinrichtung, insbesondere Röntgeninspektionsvorrichtung, sowie ein Verfahren hierfür.

Derartige Inspektionsvorrichtungen und Verfahren werden bei Schüttgütern, insbesondere im Lebensmittelbereich (z.B. Reis, Kaffeebohnen), eingesetzt, um diese auf mögliche Fremdkörper zu untersuchen. Dazu wird ein Produktstrom durch eine Inspektionsanlage, insbesondere Röntgeninspektionsanlage, mittels eines Fördersystems, insbesondere Förderbands, geführt. Die Produktzufuhr erfolgt dabei durch einen Schlauch von oben.

Durch die große Fallhöhe des Förderguts (mehrere Meter) wird eine Reihe von Problemen verursacht. So können Produkte zerbrechen, wobei nur ganze Produkte, beispielsweise Kaffeebohnen, erwünscht sind. Zudem können Produkte über das Fördersystem, insbesondere Band, bzw. über seitliche Führungen (Seitenführungen) springen und eine Inspektion erschweren.

Weiterhin kann eine hohe Staubentwicklung die Inspektion beeinträchtigen und die Inspektionseinrichtung sowie das Fördersystem verschmutzen oder gar beschädigen. Gerade das Entstehen von zündfähigen Staub-Luft-Gemischen ist unbedingt zu vermeiden, wobei insbesondere ein Druckluft-Blasen nicht erlaubt (Staubentwicklung) ist.

Eine unregelmäßige Produktstromhöhe über die Bandbreite erschwert die Inspektion, insbesondere die Röntgen-Auswertung.

Der nicht unerhebliche Staudruck von oben erschwert den Bandanlauf und erfordert einen erhöhten Motorstrom und/oder größer dimensionierten Antriebsmotor.

Bei herkömmlich betriebenen Inspektionsanlagen ist der Zugang zum Zuführtrichter und damit dessen Demontage für eine Reinigung schwierig. Zudem kommt es bei kleinkörnigem Schüttgut (durch Verklemmen unter der Seitenführung, unkontrolliertes Verspringen, etc.) des Öfteren zu einem Maschinen-Ausfall.

Der vorliegenden Erfindung liegt daher die Aufgabe zugrunde, eine Zuführvorrichtung für eine Inspektionseinrichtung sowie eine Inspektionseinrichtung mit einer derartigen Zuführvorrichtung und ein Verfahren zur Optimierung des Inspektionsergebnisses einer Inspektionseinrichtung mit einer derartigen Zuführvorrichtung zu schaffen, die vorstehende Nachteile verhindert und einen schonenden Richtungswechsel der Produkte eines aus Schüttgut bestehenden Produktstroms aus der z-Richtung in die x-Richtung bewirkt.

Diese Aufgabe wird erfindungsgemäß durch eine Zuführvorrichtung mit den Merkmalen des Anspruchs 1, durch eine Inspektionseinrichtung mit den Merkmalen des Anspruchs 9 sowie durch ein Verfahren mit den Merkmalen des Anspruchs 14 gelöst.

Die erfindungsgemäße Zuführvorrichtung weist einen Zwischenbereich auf, der als eine - in Förderrichtung x gesehen - rückseitige, gekrümmte Wandung ausgebildet ist. Die Krümmung der Wandung erfolgt hierbei im Profil (x-z-Ebene) entlang einer Kurve, die von einer im Wesentlichen senkrechten (z-Achse) Ausrichtung in eine nahezu waagrechte Ausrichtung (x-Achse) übergeht. Die Wandung endet vorzugsweise, bevor die Horizontale erreicht wird, so dass mit der x-Achse ein Winkel größer Null gebildet wird.

Die Krümmung kann im Sinne der Erfindung entlang einer beliebigen Kurve erfolgen, wobei der Begriff Krümmung auch eine Kurve mit einem geraden Bereich oder mehreren geraden Bereichen mit unsteten Übergängen einschließt. Vorzugsweise weist zumindest die rückseitige Wandung keine Ecken und Kanten auf, so dass das Risiko einer Beschädigung der Produkte, insbesondere von unverpackten Lebensmitteln, wie beispielsweise Nüsse, Erbsen, Mais, Reis, vermindert werden kann.

Im Sinne der Erfindung handelt es sich bei den Produkten um Produkte eines aus Schüttgut bestehenden Produktstroms, auch wenn im Folgenden von Produkten gesprochen wird. Einzeln vorliegende bzw. diskrete Produkte, wie Flaschen, Becher, Verschlüsse, Tabletten, etc., die einzeln vorliegen oder bei der Verarbeitung vereinzelt werden, sind daher nicht als Produkte eines aus Schüttgut bestehenden Produktstroms zu verstehen.

In jedem Fall wird durch diese Wandung ein schonender Richtungswechsel der Produkte aus der z-Richtung in die (nahezu) x-Richtung bewirkt. Dabei wird der Druck (der senkrecht fallenden) Produkte zumindest teilweise von der Wandung aufgenommen, so dass der (aus der Gewichtskraft und/oder der Bewegungsenergie) resultierende Druck des Produktstroms (Säule) auf ein unterhalb der Ausgangsöffnung angeordnetes Fördersystem, insbesondere Förderband, (es handelt sich hierbei um statischen Druck bei Bandstillstand und dynamischen Druck im Betrieb) reduziert wird. Vorteilhafterweise kann hierdurch die Beanspruchung des Fördersystems verringert werden. Insbesondere wird der Bandanlauf erleichtert, so dass kein erhöhter Motorstrom und/oder größer dimensionierten Antriebsmotor erforderlich ist. Der Betrieb der Inspektionseinrichtung umfasst hierbei nicht nur vorzugsweise die Inspektion selbst sondern auch andere etwaige Betriebsarten, wie Wartungs-, Reinigungsmodus, etc.

Die Zuführvorrichtung besteht aus hygienegerechtem, leicht zu reinigendem Material, vorzugsweise Edelstahl, so dass ein Einsatz im Lebensmittelbereich unbedenklich ist. Die Zuführvorrichtung ist vorzugsweise als Modul ausgebildet, so dass ein Entnehmen und Einsetzen - auch ein Wechsel von unterschiedlich ausgebildeten Zuführvorrichtungen - in eine Inspektionseinrichtung bzw. in ein Inspektionssystem auf schnelle, einfache Art und Weise erfolgen kann. Hierdurch kann auf unterschiedliche Anforderungen, insbesondere bei einem Produktwechsel, der einen Tausch der Siebe, Prallelemente, etc. erfordert, reagiert werden.

In bevorzugter Ausgestaltung der Erfindung endet die gekrümmte rückseitige Wandung in Richtung der Ausgangsöffnung, bevor sie in die Horizontale übergeht, so dass jeder Bereich der Krümmung tangential zur horizontalen x-Achse einen Winkel größer Null aufweist. Hierdurch wird Liegenbleiben von Produkten in der Zuführvorrichtung oder gar deren Verstopfen vermieden.

In seinem Endbereich kann der Zwischenbereich vor Erreichen der Ausgangsöffnung enden, so dass zwischen dem unteren Ende des Zwischenbereiche und der Ausgangsöffnung und einem etwaigen Verstellelement in x-Richtung gesehen eine Lücke besteht.

In weiterer Ausgestaltung der Erfindung weist der Zwischenbereich in seinem Endbereich vor der Ausgangsöffnung eine nach unten abknickende Unterkante auf. Dies ermöglicht ein sicheres Leerfahren nach Beendigung der Produktzufuhr. Vorzugsweise reicht die Unterkante bis nahe zu der Oberseite der Förderebene, so dass die Unterkante die Förderebene, insbesondere das Band, vor Aufbringen des Produktstroms leer räumt.

In besonders bevorzugter Ausgestaltung der Erfindung weist die Zuführvorrichtung ausgangsseitig bzw. an der Ausgangsöffnung ein Verstellelement, beispielsweise in Form eines vorzugsweise eben ausgebildeten Verstellblechs oder einer Verstellklappe, auf, das im Wesentlichen in der Höhe in z-Richtung verstellt werden kann. Durch dieses Verstellelement kann auf einfache Art und Weise die Höhe der Ausgangsöffnung (variabel) eingestellt werden. Vorzugsweise besteht zwischen Verstellelement und Ende der abgeknickten Unterkante ein deutlicher Abstand.

Das Verstellelement ist in weiterer Ausgestaltung der Erfindung in seiner Neigung zur vertikalen z-Achse einstellbar. Durch eine entsprechende Einstellung wird eine Anpassung an die Rieselfähigkeit der jeweiligen Produkte ermöglicht.

Durch das Verstellelement und dessen entsprechende Einstellung (vertikal und/oder mit Neigung) kann auch die Produktstromhöhe bzw. die Dicke des Produktstrombelags auf ein gewünschtes Maß begrenzt werden, so dass für die Durchstrahlung eine geringere Energie ausreicht und insbesondere die Leistung einer Röntgenquelle reduziert werden kann.

Da die Durchstrahlung und damit die Grauwerte des Inspektionsbilds eines Produktstroms von dessen Masse pro Volumen bzw. dessen Dichte, also Schüttgutdichte, abhängen, ist es auch vorteilhaft die Produktstromhöhe in Abhängigkeit der Produktstromdichte bzw. Schüttgutdichte zu wählen, so dass der Massenstrom auf ein vorgegebenes Maß konstant gehalten werden kann. Beispielsweise wird bei einer höheren Schüttgutdichte eine geringere Produktstromhöhe eingestellt, so dass keine Erhöhung der Strahlungsenergie erforderlich ist.

Weiterhin ist es denkbar, eine konstante Einlagigkeit des Produktstroms zu gewährleisten. So kann auch eine rein optische Inspektion in höchster Qualität erfolgen, da ein Verdecken von nicht sichtbaren, darunter liegenden Lagen eines Schüttguts vermieden wird.

Das Verstellen in z-Richtung und/oder das Einstellen der Neigung kann manuell oder automatisch (vorzugsweise mit Anzeige der aktuell eingestellten Höhe) erfolgen. Zudem ist es denkbar, die erfolgten Einstellungen, insbesondere als Produktionsnachweis, (in einer entsprechenden Speichereinrichtung) abzuspeichern und zu archivieren.

In weiterer Ausgestaltung der Erfindung weist die Zuführvorrichtung eine Regelvorrichtung auf, die im laufenden Betrieb der Inspektionseinrichtung eine Anpassung der Höhe und/oder des Neigungswinkels des Verstellelements an die Fördergeschwindigkeit des Fördersystems ermöglicht. Die Anpassung des Verstellelements erfolgt beispielsweise mittels steuerbarer Aktuatoren, Stellmotoren oder Ähnlichem.

Auf diese Weise kann eine möglichst fortwährend vorgegebene konstante Produktstromhöhe, insbesondere in x-Richtung gesehen, und damit ein konstant gefördertes Produktvolumen, generiert werden. In y-Richtung kann aber auch eine variable Höhe vorgesehen sein. Beispielsweise ist es denkbar, dass die Produktstromhöhe zu den Seitenrändern abnimmt, um die Durchstrahlungsbreite der Röntgeninspektionsvorrichtung und die Transportbreite bzw. Gurtbreite der Fördereinrichtung optimal auszunutzen.

In weiterer Ausgestaltung der Erfindung weist das Verstellelement eine gekrümmte Unterkante auf, so dass die Produktstromhöhe in y-Richtung an einen Durchtrittsweg der Röntgenstrahlung durch das Schüttgut angepasst werden kann und der Durchtrittsweg vorzugsweise unter jedem Winkel nahezu gleich lang ist. Entsprechend kann eine sich in y-Richtung gesehene fächerförmig von einer Röntgenquelle ausbreitende Röntgenstrahlung eingesetzt werden, ohne dass sich die Grauwerte des Inspektionsbilds eines homogenen Produktstroms zu den Rändern - auf Grund höherer Absorption durch den längeren Durchstrahlungsweg - verändern. Insbesondere kann die Unterkante zur x-z-Ebene symmetrisch zu einem mittig erhöhten Bereich sein und seitlich kontinuierlich nach unten zunehmende Flanken aufweisen.

In einer besonderen Ausgestaltung der Erfindung weist die Zuführvorrichtung im Bereich der Eingangsöffnung einen, insbesondere mehrstufig mit unterschiedlichen, vordefinierten Anschlussweiten ausgebildeten, Anschlussstutzen auf. Auf diese Weise kann ein und dieselbe Zuführvorrichtung in verschiedenen Inspektionsvorrichtungen mit unterschiedlichen, meist normierten Anschlussweiten eingesetzt werden. Vorzugsweise kann durch den Anschlussstutzen, beispielsweise mittels flexibler Verbindung oder Vorsehens eines Spiels, eine mechanische Entkopplung erfolgen. Der Anschlussstutzen kann damit auch als Schutz gegen beispielsweise durch ein Rüttelrohr verursachte Vibrationen dienen. Weiterhin ist es denkbar, dass der Anschlussstutzen als Staubschutz fungiert und einen Staubaustritt nach außen verhindert.

In weiterer Ausgestaltung der Erfindung weist die Zuführvorrichtung einen Einschub mit dem Zwischenbereich auf, der von einem oberhalb angeordneten Anschlussstutzen (beispielsweise über eine entsprechende an Anschlussstutzen und Einschub komplementär ausgebildete Führung) abgezogen und auf diesen aufgeschoben werden kann.

Hierdurch ist es möglich, unterschiedliche Einschübe mit unterschiedlicher Form und/oder Geometrie, insbesondere mit unterschiedlich ausgebildeten gekrümmten Wandungen je nach Anforderung (Rieselfähigkeit, Klebeeigenschaften der Produkte, Art der Trennmittel, Verklumpung, Springen, Grobkörnigkeit, etc.) einzusetzen. So ist es denkbar, einen ganzen (Format-)Satz von unterschiedlichen Einschüben vorzuhalten und je nach Bedarf durch einfaches Einschieben, insbesondere werkzeuglos, modular einzusetzen. Beispielweise erfordern Rosinen als Schüttgut - infolge deren Klebeeigenschaft - in jedem Bereich, insbesondere am unteren Ende der Wandung, eine größere Steigung als Produkte mit geringerer Klebeeigenschaft, um ein Stocken zu vermeiden.

In einer weiteren Ausgestaltung der Erfindung erfolgt ein Zuschalten des Produktstroms durch einen gesteuerten Absperrschieber (Bringerfreigabe) in der Zufuhrleitung erst, wenn das Band läuft, so dass auch hierdurch der Staudruck auf ein unterhalb der Ausgangsöffnung angeordnetes Fördersystem verringert oder gar verhindert werden kann.

Die Zuführvorrichtung ist in der Inspektionsvorrichtung mittels eines werkzeuglos betätigbaren Schnellverschlusses derart angeordnet, dass ein seitliches Entnehmen oder Einschieben, insbesondere im Wesentlichen in y-Richtung, ermöglicht wird. Hierdurch wird vorteilhafterweise ein komfortabler, einfacher und schneller Wechsel ohne weitere Demontage der Inspektionsvorrichtung ermöglicht.

In weiterer Ausgestaltung der Erfindung ist die Zuführvorrichtung zur x-z-Ebene symmetrisch ausgebildet, um ein beidseitiges, insbesondere seitenversetztes, Einsetzen zu ermöglichen. Neben einer einfacheren Fertigung kann hierdurch ohne größere Änderung auch die Förderrichtung geändert werden.

In besonders bevorzugter Ausgestaltung der Erfindung weist die Zuführvorrichtung für den Einsatz in einer entsprechenden Inspektionsvorrichtung in ihr oder an ihr anordenbare und bevorzugt modular austauschbare, insbesondere einlegbare oder einschiebbare Elemente, wie beispielsweise Absperrschieber, Filterelemente, Siebe oder Prallelemente, auf. Diese Elemente sind vorzugsweise im Bereich des Anschlussstutzens, insbesondere an oder in dem Anschlussstutzen, angeordnet. Die Elemente können vorzugsweise in Form von einschieb- und herausziehbaren Einsätzen vorliegen, wobei besonders bevorzugt die Elemente in den Einsätzen selbst modular austauschbar eingelegt oder eingeschoben werden können. Hierdurch kann auf einfache Weise das Einsatzgebiet der Zuführvorrichtung in Abhängigkeit von der Art des Schüttgutes erweitert werden. Die Elemente können hierbei durch den Verwender bzw. die Bedienperson selbst eingeschoben oder eingelegt werden, wobei auch Rastpositionen denkbar sind.

In weiterer Ausgestaltung der Erfindung ist an der Zuführvorrichtung angeordnet oder in die Zuführvorrichtung integriert eine Staubabsaugeeinrichtung vorgesehen. Diese Staubabsaugeeinrichtung kann vorzugsweise im Bereich des Anschlussstutzens, insbesondere an oder in dem Anschlussstutzen, vorgesehen sein. Hierdurch kann eine Verschmutzung sowie eine Beeinträchtigung des Inspektionsergebnisses und insbesondere das Risiko der Entstehung von zündfähigen Staub-Luft-Gemischen vermieden werden.

In bevorzugter Ausgestaltung der Erfindung ist die Zuführvorrichtung teilweise als Bestandteil eines Strahlenschutzgehäuses (einer Inspektionsvorrichtung) ausgebildet. Insbesondere die stromaufwärts (Produktstrom) angeordnete gekrümmte Wandung kann hierbei gleichzeitig als (Strahlenschutz-)Gehäusewandung der Inspektionseinrichtung dienen, und die Schutz-/Schirmfunktion gegen Strahlung, insbesondere radioaktive Strahlung, übernehmen. Hierdurch wird auf einfache Art und Weise eine geringe Baugröße ermöglicht.

In besonderer Ausgestaltung wird nach dem erfindungsgemäßen Verfahren zur Optimierung des (Röntgen-)Inspektionsergebnisses die Zufuhrmenge an der Eingangsöffnung und/oder die Höhe und/oder Neigung des Verstellelements und/oder die Fördergeschwindigkeit eingestellt bzw. geregelt. Weiterhin ist es denkbar, einstellbare Seitenführungen vorzusehen, wobei der Querabstand der Seitenführungen für sich genommen oder in Kombination mit den vorgenannten Einstellungsmöglichkeiten entsprechend geregelt werden kann. Die Einstellung bzw. Regelung erfolgt hierbei derart, dass eine im Wesentlichen fortwährend konstante - und falls gewünscht geringe - Produktstromhöhe generiert wird und/oder die Durchstrahlungsbreite der (Röntgen-) Inspektionsvorrichtung optimal ausgenutzt wird und/oder sich ein möglichst hoher Durchsatz ergibt.

Weitere vorteilhafte Ausgestaltungen der Erfindung ergeben sich aus den abhängigen Ansprüchen.

Die Erfindung wird nachfolgend anhand einer in der Zeichnung dargestellten erfindungsgemäßen Ausführungsform näher erläutert.

In der Zeichnung zeigen:
- Fig. 1: eine perspektivische Ansicht eines Zuführtrichters mit Förderband, höhenverstellbarem, geschlossenem Blech und einem Handrad;
- Fig. 2: eine perspektivische Ansicht des Zuführtrichters mit Förderband nach Fig. 1 mit offenem Verstellblech;
- Fig. 3: einen Längsschnitt eines Zuführtrichters nach Fig. 1 als Einzelheit ohne Verstellblech und Handrad;
- Fig. 4: eine Seitenansicht (Längsschnitt) des Zuführtrichters mit Förderband nach Fig. 2;
- Fig. 5: einen Querschnitt eines Zuführtrichters mit Förderband nach Fig. 1 (entlang der Schnittebene A-A'-B-B');
- Fig. 6: eine perspektivische Ansicht eines Einschubs des Zuführtrichters als Einzelheit nach Fig. 5;
- Fig 7: eine Vorderansicht auf den Einschub des Zuführtrichters nach Fig. 6 mit einem Verstellblech mit gekrümmter Unterkante;
- Fig. 8: eine schematische Schnittansicht (Querschnitt) eines Strahlenverlaufs und
- Fig. 9: eine schematische perspektivische Ansicht des Zuführtrichters nach Fig. 3 mit einem Einschub mit Prallstäben.

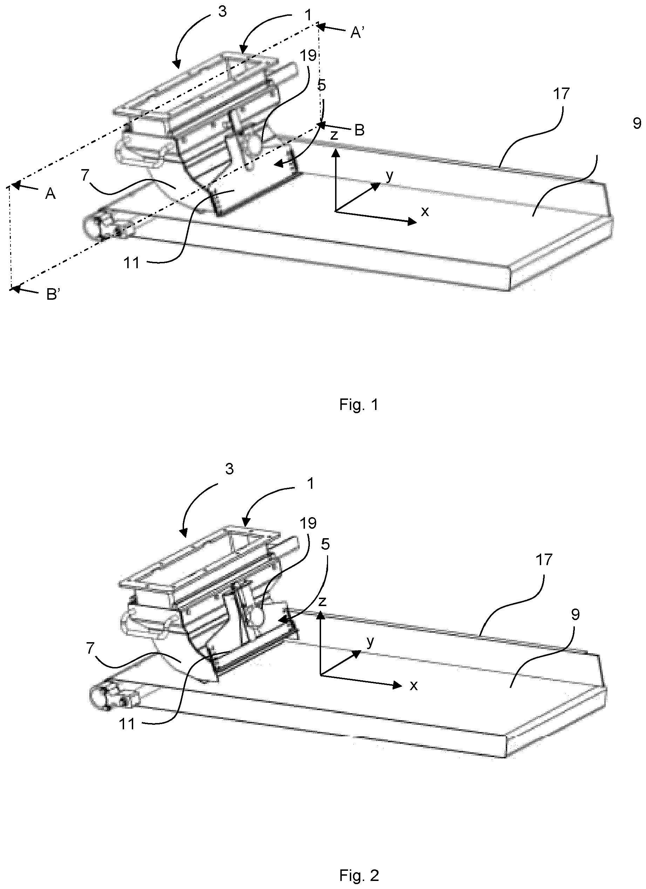

Die in Fig. 1, Fig. 2 und Fig. 4 schematisch dargestellte erfindungsgemäße Zuführvorrichtung in Form eines Zuführtrichters 1 besitzt eine obere Eingangsöffnung 3 und eine untere Ausgangsöffnung 5.

Die obere Eingangsöffnung 3 weist im Wesentlichen in z-Richtung und dient der Aufnahme von Schüttgut, wie beispielsweise Reis, Rosinen, Nüssen oder Kaffeebohnen.

In der schematischen Darstellung wurde aus Übersichtlichkeitsgründen auf die Darstellung des Anschlusses an einen Vorratsbehälter ebenso wie auf die Darstellung einer Halterung der Zuführvorrichtung verzichtet, da dies für eine Fachmann geläufig ist.

Die untere Ausgangsöffnung weist im Wesentlichen in x-Richtung bzw. Förderrichtung eines Förderbandes 9, so dass das Schüttgut von der senkrechten Fallrichtung (z-Richtung) auf das horizontale Förderband (in x-y-Ebene) umgelenkt wird.

Das Förderband weist eine seitliche hintere Führung 17 auf, um das zu fördernde Schüttgut seitlich zu begrenzen und zu führen. Auf die Darstellung der vorderen seitlichen Führung wurde nur aus Gründen der besseren Übersichtlichkeit in der Zeichnung verzichtet.

Als Abschluss der unteren Ausgangsöffnung 5 ist ein Verstellelement 11, beispielsweise in Form eines Bleches, angeordnet. Dieses Verstellelement kann in seiner Position in z-Richtung verschoben und beispielsweise mittels eines Handrads 19 festgestellt werden.

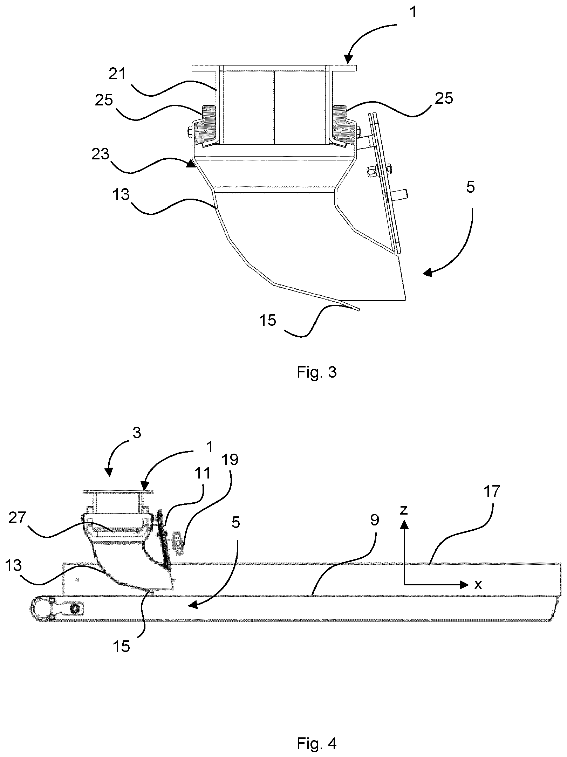

Wie aus der in Fig. 3 und Fig. 4 dargestellten Seitenansicht des Zuführtrichters 1 (in Fig. 4 als Einzelheit ohne Förderband 9 und in Fig. 3 mit Förderband) ersichtlich, weist das Verstellelement 11 zur senkrechten z-Achse eine Neigung auf und ist in x-Richtung gesehen mit seiner Unterkante leicht nach rechts geneigt angeordnet. Durch die Neigung wird das kontinuierliche Aufbringen des Schüttgutes auf das Förderband 9 erleichtert, wobei der Grad der Neigung in Abhängigkeit von der Rieselfähigkeit des Schüttgutes eingestellt werden kann.

Der Zuführtrichter 1 geht von seiner oberen Eingangsöffnung 3 über einen Zwischenbereich 7 in seine untere Ausgangsöffnung 5 über, wobei sich der Querschnitt in Richtung Ausgangsöffnung 5 verkleinert.

Der Zwischenbereich weist in x-Richtung bzw. Förderrichtung gesehen eine rückseitige Wandung 13 auf, die als umlenkende Rutsche für das Schüttgut dient. Der Übergang von z-Richtung nahezu zur x-Richtung erfolgt hierbei durch eine entsprechende Krümmung der Wandung 13, wobei diese Krümmung nicht als stetige Kurve ausgebildet sein muss, sondern - wie dargestellt - auch als mehrere aneinander anschließende gerade Platten ausgebildet sein kann. Vorzugsweise weist die Rückwandung 13 an keiner Stelle einen tangentialen horizontalen Bereich auf, so dass ein Liegenbleiben von Produkten im Zuführtrichter 1 vermieden werden kann.

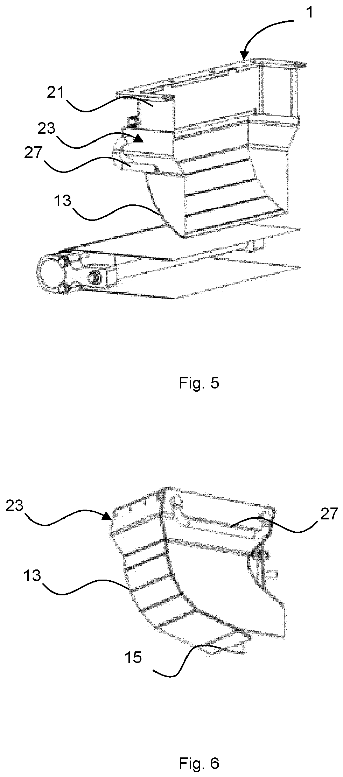

In ihrem unterem Endbereich (siehe auch Fig. 6) weist die Wandung 13 deutlich vor dem abschließenden Verstellelement 11 bzw. der Ausgangsöffnung 5 einen abfallenden Bereich in Form einer Unterkante 15 auf. Hierdurch wird das Leeren des Zuführtrichters unterstützt und ein Stauen des Produktstroms des Schüttguts vermieden.

Zudem kann durch die Unterkante 15 des Endbereichs des Zwischenbereichs 7 das Band leergeräumt werden, bevor das Schüttgut aufgebracht wird und damit kann das Eindringen von Verschmutzungen in den Produktstrom verhindert werden.

Fig. 4 zeigt das Verstellelement 11 in komplett geöffneter Position. Im Unterschied zu Fig. 4 ist in Fig. 3 das Verstellelement 11 sowie das Handrad 19 dagegen nicht enthalten.

Der Zuführtrichter 1 weist in seinem oberen Bereich einen Anschlussstutzen 21 auf, der dem Anschluss, beispielsweise mittels eines über einen Flansch verbundenen, nicht dargestellten, Zuführrohrs, dient.

Mit diesem Anschlussstutzen ist ein unterhalb angeordneter Einschub 23 verbunden, der vorzugsweise in y-Richtung von vorne, beispielsweise über eine entsprechende an Anschlussstutzen und Einschub komplementär ausgebildete Führung 25, in den Anschlussstutzen eingeschoben werden kann.

Um ein Einschieben und Herausziehen zu erleichtern, weist der Einschub seitlich (in Fig. 4 von vorn) in seinem oberen Bereich einen Griff 27 auf.

Wie aus Fig. 5 ersichtlich, ist der Zuführtrichter hinsichtlich der x-z-Ebene symmetrisch ausgebildet, so dass auch ein Einschieben in umgedrehter Position möglich ist. Hierdurch kann, falls gewünscht, durch einfaches umgekehrtes Einsetzen des Einschubs 23 in den Anschlussstutzen 21 die Bandlaufrichtung eines bestehenden Systems gewechselt werden, ohne dass weiter Umbauten erforderlich sind.

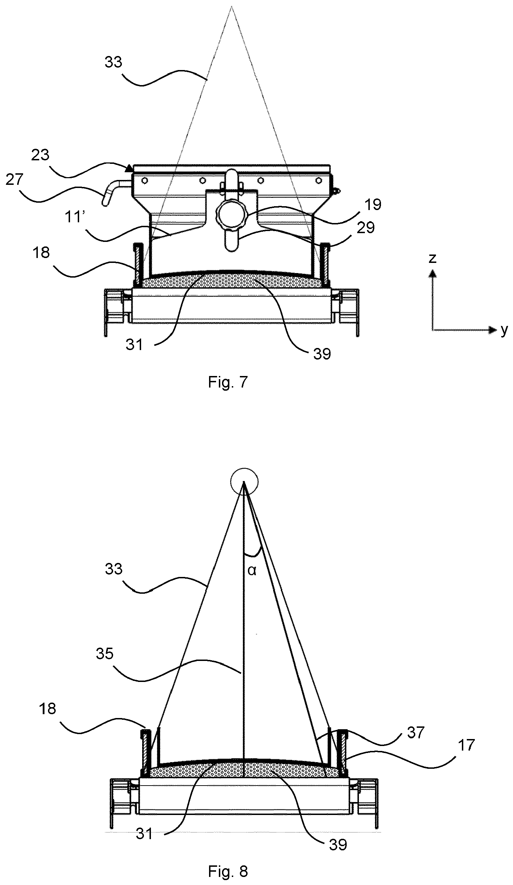

Der in Fig. 7 dargestellte Zuführtrichter 1 ist mit einem Verstellelement 11' versehen, das im Unterschied zu dem Verstellelement 11 in Fig. 1 und Fig. 2 statt einer geraden Unterkante eine gekrümmte Unterkante 31 besitzt.

Die Krümmung der Unterkante ist zur x-z-Ebene symmetrisch ausgebildet mit einem mittig erhöhten Bereich und seitlich kontinuierlich nach unten zunehmenden Flanken. Die Produktstromhöhe in y-Richtung kann durch diese gekrümmte Unterkante 31 an einen Durchtrittsweg einer Röntgenstrahlung 33 durch das Schüttgut angepasst werden.

Das Verstellelement 11' weist ebenso wie das Verstellelement 11 ein senkrechtes Langloch 29 auf, so dass das Verstellelement 11, 11' in z-Richtung verschoben werden und in gewünschter Position mittels des Handrades 19 fixiert werden kann.

Wie aus Fig. 8 ersichtlich, ist bei einer typischen fächerförmigen Röntgenstrahlung 33, also einem sich von einer punktförmigen Strahlenquelle ausbreitenden fächerförmigen Strahlengang, der mittige Strahl 35 senkrecht zur y-Achse ausgerichtet, wohingegen zu den Bandseiten die Strahlengänge einen hierzu größer werdenden Winkel α aufweisen. Entsprechend vergrößert sich der Weg der Röntgenstrahlen durch das Schüttgut bzw. den Produktstrom (bis zu einem Röntgendetektor, insbesondere Zeilenkamera) in Abhängigkeit vom Abstand zur Mitte bzw. zu dem mit der Mittelsenkrechten eingeschlossenen Winkel α.

So entspricht der Weg der Röntgenstrahlen am Beispiel des in Fig. 8 eingezeichneten Strahls 37 durch den Produktstrom dann nicht mehr der Höhe des Produktstroms (an der Stelle des Auftreffens), sondern entspricht einem längeren Weg, nämlich gemäß dem Kosinussatz dem Quotienten aus der Höhe und dem Kosinus des Winkels α.

### Strahlengang = Produktstromhöhe/cos α

Die Krümmung der Unterkante und damit die Höhe des Produktstroms über die Bandbreite (y-Richtung) kann entsprechend der Geometrie der Röntgenstrahlung 33 vorzugsweise derart gewählt werden, dass der Strahlungsweg bzw. der Durchtrittsweg durch den Produktstrom konstant über die Bandbreite (y-Richtung) liegt. Entsprechend kann eine sich in y-Richtung gesehene fächerförmig von einer Röntgenquelle ausbreitende Röntgenstrahlung eingesetzt werden, ohne dass sich die Grauwerte zu den Rändern verändern.

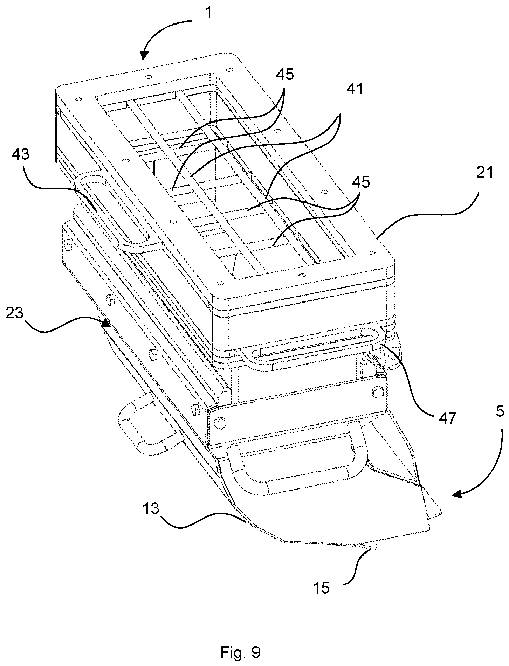

Die in Fig.9 dargestellte Ausführungsform eines Anschlussstutzen 21 entspricht grundsätzlich dem vorstehend erläuterten Anschlussstutzen 21, zeigt jedoch zusätzlich in dem Anschlussstutzen angeordnete Prallstäbe 41 und 45.

Die oberen in y-Richtung gerichteten (vorzugsweise zwei) Prallstäbe 41 können über einen Griff 43 in Form eines Einsatzes entlang der x-Richtung in den Anschlussstutzen 21 eingeschoben und herausgezogen werden. Die unteren in x-Richtung gerichteten (vorzugsweise vier) Prallstäbe 45 können über einen Griff 47 in Form eines Einsatzes entlang der y-Richtung in den Anschlussstutzen 21 eingeschoben und herausgezogen werden. Selbstverständlich können auch andere Einschübe mit einer anderen Anzahl und/oder Art von Elementen, wie beispielsweise Absperrschieber, Filterelemente, Siebe oder Prallelemente, eingeschoben werden. Zudem können auch in den Einschüben selbst Elemente, insbesondere Stäbe, modular austauschbar eingelegt oder eingeschoben werden.

Die Prallstäbe 41, und 45 können hierbei in einer - in Abhängigkeit von der Art des Schüttguts 39 - geeigneten Geometrie angeordnet sein, um das von oben zugeführte Schüttgut 39 besser zu verteilen.

Beispielsweise können, wie in Fig. 9 dargestellt, in einer ersten oberen Reihe 2 obere Prallstäbe 41 quer zu einer darunter liegenden unteren Reihe von vier untere - über den Innenraum des Anschlussstutzens 41 verteilte - Prallstäbe 45 angeordnet sein.

Die Anordnung von Prallstäben kann in Art der Prallstäbe und/oder in deren Position an das jeweilige Schüttgut 39 angepasst werden, um eine optimale, vorzugsweise gleichförmige Verteilung zu ermöglichen.

### Bezugszeichenliste:

- 1: Zuführtrichter
- 3: obere Eingangsöffnung
- 5: untere Ausgangsöffnung
- 7: Zwischenbereich
- 9: Förderband
- 11: Verstellelement mit gerader Unterkante
- 11': Verstellelement mit gekrümmter Unterkante
- 13: Wandung
- 15: Unterkante am Endbereich der Wandung
- 17: hintere Seitenführung
- 18: vordere Seitenführung
- 19: Handrad
- 21: Anschlussstutzen
- 23: Einschub
- 25: Führung
- 27: Griff
- 29: Langloch
- 31: gekrümmte Unterkante des Verstellelements
- 33: fächerförmige Röntgenstrahlung
- 35: Strahlengang Mittelsenkrechte
- 37: Strahlengang mit Winkel α
- 39: Schüttgut
- 41: obere Prallstäbe
- 43: Griff für obere Prallstäbe
- 45: untere Prallstäbe
- 47: Griff für untere Prallstäbe
- 49: untere Prallstäbe
- 51: Flansch

- x: Förderrichtung des Förderbandes
- y: Querrichtung des Förderbandes
- z: Höhenrichtung des Zuführtrichters bzw. der Zuführvorrichtung
- α: Winkel Strahlengang zur Mittelsenkrechten

## Patentansprüche

1. Hygienegerechte modulare Zuführvorrichtung (1) für eine Inspektionseinrichtung, insbesondere Röntgeninspektionsvorrichtung, um Produkte eines aus Schüttgut (39) bestehenden Produktstroms, der aus einer im Wesentlichen senkrechten z-Richtung zugeführt wird, in eine im Wesentlichen horizontale Förderrichtung x und damit auf eine zur z-Richtung senkrechten in x-y-Richtung befindliche Förderebene zu überführen, wobei
a) die Zuführvorrichtung (1) eine in z-Richtung gesehene obere, im Wesentlichen in z-Richtung gerichtete, Eingangsöffnung (3) und eine in z-Richtung gesehene untere, im Wesentlichen in x-Richtung gerichtete, Ausgangsöffnung (5) aufweist,
b) beide Öffnungen (3, 5) mit einem Zwischenbereich (7) verbunden sind,
wobei der Zwischenbereich (7) eine wenigstens in Förderrichtung x gesehene rückseitige, gekrümmte Wandung (13) aufweist, um einen schonenden Richtungswechsel der Produkte aus der z-Richtung in die x-Richtung zu bewirken, so dass der durch die Fallbewegung der Produkte entstehende Druck zumindest anteilig von der Wandung (13) aufgenommen und dadurch der Druck des Produktstroms auf ein unterhalb der Ausgangsöffnung (5) angeordnetes Fördersystem, insbesondere Förderband (9), reduziert wird.

2. Zuführvorrichtung nach Anspruch 1, **dadurch gekennzeichnet, dass** die gekrümmte, rückseitige Wandung (13) in Richtung der Ausgangsöffnung (5) endet, bevor sie in die Horizontale übergeht, so dass jeder Bereich der gekrümmten Wandung (13) tangential zur horizontalen x-Achse einen Winkel größer Null aufweist.

3. Zuführvorrichtung nach Anspruch 1 oder 2, **dadurch gekennzeichnet, dass** der Zwischenbereich (7) in seinem Endbereich vor der Ausgangsöffnung (5) eine nach unten abknickende Unterkante (15) aufweist, um ein sicheres Leerfahren nach Beendigung der Produktzufuhr zu ermöglichen.

4. Zuführvorrichtung nach einem der vorherigen Ansprüche, **dadurch gekennzeichnet, dass** die Zuführvorrichtung (1) an der Ausgangsöffnung (5) ein Verstellelement (11, 11') aufweist, das im Wesentlichen in der Höhe in z-Richtung verstellt werden kann, um die Höhe der Ausgangsöffnung (5) zu variieren.

5. Zuführvorrichtung nach Anspruch 4, **dadurch gekennzeichnet, dass** das Verstellelement (11) in seiner Neigung zur vertikalen z-Achse einstellbar ist, um eine Anpassung an die Rieselfähigkeit der Produkte des Schüttguts (39) zu ermöglichen.

6. Zuführvorrichtung nach Anspruch 4 oder 5, **dadurch gekennzeichnet, dass** die Zuführvorrichtung (1) eine Regelvorrichtung aufweist, die im laufenden Betrieb der Inspektionseinrichtung eine Anpassung der Höhe und/oder des Neigungswinkels des Verstellelements (11) an die Fördergeschwindigkeit des Fördersystems ermöglicht, um
a) eine möglichst fortwährend vorgegebene konstante Produktstromhöhe zu generieren und/oder
b) einen möglichst fortwährend vorgegebenen konstanten Massenstrom zu generieren und/oder
c) die Durchstrahlungsbreite einer Röntgeninspektionsvorrichtung optimal auszunutzen und/oder
d) eine konstante Einlagigkeit für eine optische Inspektion zu gewährleisten.

7. Zuführvorrichtung nach einem der Ansprüche 4 bis 6, **dadurch gekennzeichnet, dass** das Verstellelement (11) eine gekrümmte Unterkante (31) aufweist, so dass der Durchtrittsweg der Röntgenstrahlung (33, 35, 37) durch das Schüttgut (39) unter jedem Winkel (α) nahezu gleich lang ist.

8. Zuführvorrichtung nach einem der vorhergehenden Ansprüche, **dadurch gekennzeichnet, dass** die Zuführvorrichtung (1) im Bereich der Eingangsöffnung (3) einen, insbesondere mehrstufig mit unterschiedlichen vordefinierten Anschlussweiten ausgebildeten, Anschlussstutzen (21) aufweist.

9. Inspektionsvorrichtung mit einer Zuführvorrichtung (1) nach einem der vorhergehenden Ansprüche, **dadurch gekennzeichnet, dass** die Zuführvorrichtung (1) derart in der Inspektionsvorrichtung mittels eines werkzeuglos betätigbaren Schnellverschlusses angeordnet ist, dass ein seitliches Entnehmen oder Einschieben ermöglicht wird.

10. Inspektionsvorrichtung nach Anspruch 9, **dadurch gekennzeichnet, dass** die Zuführvorrichtung (1) zur x-z-Ebene symmetrisch ausgebildet ist, um ein beidseitiges Einsetzen zu ermöglichen.

11. Inspektionsvorrichtung nach Anspruch 9 oder 10, **dadurch gekennzeichnet, dass** die Zuführvorrichtung (1) in ihr oder an ihr anordenbare und bevorzugt modular austauschbare Elemente, wie beispielsweise Absperrschieber, Filterelemente, Siebe oder Prallelemente, aufweist.

12. Inspektionsvorrichtung nach einem der Ansprüche 9 bis 11, **dadurch gekennzeichnet, dass**, an der Zuführvorrichtung (1) angeordnet oder in der Zuführvorrichtung (1) integriert, eine Staubabsaugeeinrichtung vorgesehen ist.

13. Inspektionsvorrichtung nach einem der Ansprüche 9 bis 12, **dadurch gekennzeichnet, dass** die Zuführvorrichtung (1) teilweise als Bestandteil eines Strahlenschutzgehäuses ausgebildet ist.

14. Verfahren zur Optimierung des Inspektionsergebnisses einer Inspektionseinrichtung, insbesondere Röntgeninspektionseinrichtung mit einer Zuführvorrichtung nach einem der Ansprüche 1 bis 12, **dadurch gekennzeichnet, dass**
a) die Zufuhrmenge an der Eingangsöffnung (3), und/oder
b) die Höhe und/oder Neigung des Verstellelements (11), und/oder
c) die Fördergeschwindigkeit einer Fördervorrichtung
so geregelt werden, dass eine im Wesentlichen fortwährend konstante Produktstromhöhe generiert wird und/oder die Durchstrahlungsbreite einer Röntgeninspektionsvorrichtung optimal ausgenutzt wird, und/oder sich ein möglichst hoher Durchsatz ergibt.
